# EUROPEAN PATENT SPECIFICATION

(11) **EP 4 289 644 B1**
(45) Date of publication and mention of the grant of the patent: **02.07.2025**
(21) Application number: 22815169.2
(22) Date of filing: 27.05.2022
(51) Int. Cl.: B60H 1/00, F25B 41/20, F25B 41/34

(54) **VALVE GROUP INTEGRATION MODULE, THERMAL MANAGEMENT SYSTEM, AND VEHICLE**
VENTILGRUPPENINTEGRATIONSMODUL, WÄRMEVERWALTUNGSSYSTEM UND FAHRZEUG
MODULE D'INTÉGRATION DE GROUPE DE SOUPAPES, SYSTÈME DE GESTION THERMIQUE ET VÉHICULE

(30) Priority: 31.05.2021 CN 202110603391
(43) Date of publication of application: 13.12.2023
(73) Proprietor: BYD Company Limited, Shenzhen, Guangdong 518118 (CN)
(72) Inventor: LI, Shibai, Shenzhen, Guangdong Province, 518118, P.R. China Guangdong 518118 (CN); JIN, Wei, Shenzhen, Guangdong Province, 518118, P.R. China Guangdong 518118 (CN); XU, Min, Shenzhen, Guangdong Province, 518118, P.R. China Guangdong 518118 (CN); YE, Meijiao, Shenzhen, Guangdong Province, 518118, P.R. China Guangdong 518118 (CN); LI, Yuzhong, Shenzhen, Guangdong Province, 518118, P.R. China Guangdong 518118 (CN)
(74) Representative: Arnold & Siedsma
(86) International application number: PCT/CN2022/095515
(87) International publication number: WO 2022/253123

(56) References cited:
- CN-A- 108 116 185
- CN-A- 111 038 216
- CN-A- 111 038 216
- CN-A- 111 976 416
- CN-A- 111 976 416
- CN-U- 215 063 015
- CN-U- 215 751 808
- CN-U- 216 033 602
- DE-A1- 19 752 133
- JP-A- 2011 235 753
- JP-A- 2011 235 753
- US-A1- 2020 132 204

## Description

### CROSS-REFERENCE TO RELATED APPLICATIONS

The present invention claims priority to Chinese Patent Application No. 202110603391.6, filed on May 31, 2021.

### FIELD

The present disclosure belongs to the field of vehicle technologies, and specifically, to a valve set integrated module, a thermal management system, and a vehicle.

### BACKGROUND

A thermal management system is an important part of a vehicle, which is configured to change a temperature environment in the vehicle and cause a driver and passengers obtain a better experience. In order to cooperate with realization of multiple thermal management modes, multiple dispersed valves are usually arranged in the system. The manner results in low flexibility and low integration of the system arrangement, thus taking up more space. In the related art, in order to solve this technical problem, multiple valves are integrated on a frame body, but the integration manner does not reduce use of a valve control assembly and simplify a pipeline arrangement of the thermal management system. The document JP 2011 235753 A describes a block with one solenoid valve and one 3-way differential pressure valve.

### SUMMARY

A first object of the present invention is to provide a valve set integrated module, to solve problems existing in the related art.

In order to achieve the above objective, the present invention provides a valve set integrated module, including:
a body, provided with multiple internal flow channels and multiple interfaces configured to communicate the internal flow channels with a heat exchange assembly of an external thermal management system;
a first electric valve and a second electric valve, arranged on the body and in communication with the internal flow channel, the first electric valve and the second electric valve both being configured to be switchable between a blocked/unblocked position and a throttled position; and
a first end of the first electric valve being in communication with an interior condenser outlet interface, a second end of the first electric valve being in communication with an exterior heat exchanger inlet interface; a first end of the second electric valve being in communication with an exterior heat exchanger outlet interface, and a second end of the second electric valve being selectively communicated with an interior evaporator inlet interface or a gas-liquid separator inlet interface.

Optionally, the internal flow channel includes an internal flow channel and an external flow channel. The body includes a first portion and a second portion. The first portion has a first connecting surface. The second portion has a second connecting surface. the first connecting surface is hermetically connected with the second connecting surface; multiple internal flow channels are arranged inside the first portion; and at least one groove is arranged on the first connecting surface of the first portion, and the groove on the first connecting surface and the second connecting surface jointly define the external flow channel.

Optionally, a sectional surface of the groove is U-shaped; and an area of the sectional surface of the groove is greater than 10% of a valve port area of the first electric valve and the second electric valve.

Optionally, the internal flow channel communicated between an interior evaporator outlet interface and the gas-liquid separator inlet interface is a linear flow channel.

Optionally, the valve set integrated module further includes a PT low pressure sensor. The PT low pressure sensor is arranged between the interior evaporator outlet interface and the gas-liquid separator inlet interface.

Optionally, the valve set integrated module further includes an electronic expansion valve arranged on the body. A first end of the electronic expansion valve is in communication with the exterior heat exchanger outlet interface. A second end of the electronic expansion valve is in communication with a plate-type heat exchanger inlet interface arranged on the body.

Optionally, the valve set integrated module further includes a battery pack heat exchanger arranged on the body. An inlet of the battery pack heat exchanger is in communication with the battery pack heat exchanger inlet interface. An outlet of the battery pack heat exchanger is connected with a gas-liquid separator.

Optionally, the electronic expansion valve and the exterior heat exchanger outlet interface are assembled on a same side of the body.

A second object of the present invention is to provide a thermal management system. The system includes an exterior heat exchange assembly of the thermal management system and the valve set integrated module in any of the above. The external heat exchange assembly includes multiple of a compressor, an interior condenser, an exterior heat exchanger, an interior evaporator, a gas-liquid separator, a PTC air heater, a blower, and a PTC water heater.

A third object of the present invention is to provide a vehicle, including the thermal management system.

The present invention designs a valve set integrated module having multiple internal passages. The valve set integrated module can communicate the internal flow channel with the heat exchange assembly of the external thermal management system through different interfaces arranged on the body to form multiple different thermal management circuits, and the first electric valve and the second electric valve integrated on the module control the unblocking/blocking or the throttling of the thermal management circuits, to realize multiple preset thermal management modes. The valve set integrated module designed through the above technical solution can reduce the use of a valve control assembly and simplify connection of a pipeline of the thermal management system while realizing multiple thermal management modes, reduce weight of the vehicle, reduce a cost and a fuel consumption, and save space for arranging the vehicle.

Other features and advantages of the present invention will be described in detail in the following detailed description part.

### BRIEF DESCRIPTION OF THE DRAWINGS

The accompanying drawings are intended to provide further understanding of the present invention and constitute a part of this specification. The accompanying drawings and the specific implementations below are used together for explaining the present invention rather than constituting a limitation to the present invention. In the accompanying drawings:
FIG. 1 is a schematic diagram of a thermal management system according to an exemplary embodiment of the present invention.
FIG. 2 is an assembly diagram of a valve set integrated module according to an exemplary embodiment of the present invention.
FIG. 3 is an exploded view of a valve set integrated module according to an exemplary embodiment of the present invention.
FIG. 4 is a front view of a valve set integrated module according to an exemplary embodiment of the present invention.
FIG. 5 is a bottom view of a valve set integrated module according to an exemplary embodiment of the present invention.
FIG. 6 is a top view of a valve set integrated module according to an exemplary embodiment of the present invention.
FIG. 7 is a schematic diagram of arrangement of an internal flow channel of a valve set integrated module according to an exemplary embodiment of the present invention.
FIG. 8 is a cross-sectional view of the valve set integrated module in FIG. 5 taken along line A-A.
FIG. 9 is a cross-sectional view of the valve set integrated module in FIG. 6 taken along line B-B.

### DETAILED DESCRIPTION

Specific implementations of the present invention are described in detail below with reference to the accompanying drawings. It should be understood that the specific implementations described herein are merely used to describe and explain the present invention, but are not intended to limit the present invention.

In the present invention, without the contrary explanation, the directional terms "inside and outside" refer to inside and outside of a relevant part, unless otherwise stated. In addition, terms "first", "second" and "third" are only used for distinguishing the description and cannot be understood as indicating or implying relative importance. In addition, in the description of the present invention, it should be noted that, unless otherwise specified or defined, the terms "arrangement", "communication", "installation" should be broadly understood, for example, may be fixed connection, may also be detachable connection or integrated connection; or the connection may be a direct connection, an indirect connection through an intermediary, or internal communication between two components. A person of ordinary skill in the art may understand the specific meanings of the foregoing terms in the present invention according to specific situations.

The present invention provides a valve set integrated module. The valve set integrated module may be configured to implement at least one of multiple preset thermal management modes. The preset thermal management modes herein include but are not limited to an air conditioning refrigeration mode, a heat pump heating mode, a battery cooling mode, an air conditioning refrigeration and battery cooling dual-open mode, and a dehumidification mode. Specific working principles of the thermal management modes are described in detail later.

To realize the multiple preset thermal management modes listed above, the thermal management system includes an external heat exchange assembly and a valve set integrated module provided in the present invention. The heat exchange assembly includes multiple of a compressor 2, an interior condenser 3, an interior evaporator 5, an exterior heat exchanger 4, and a PTC air heater 7, a blower 8, and a PTC water heater 9.

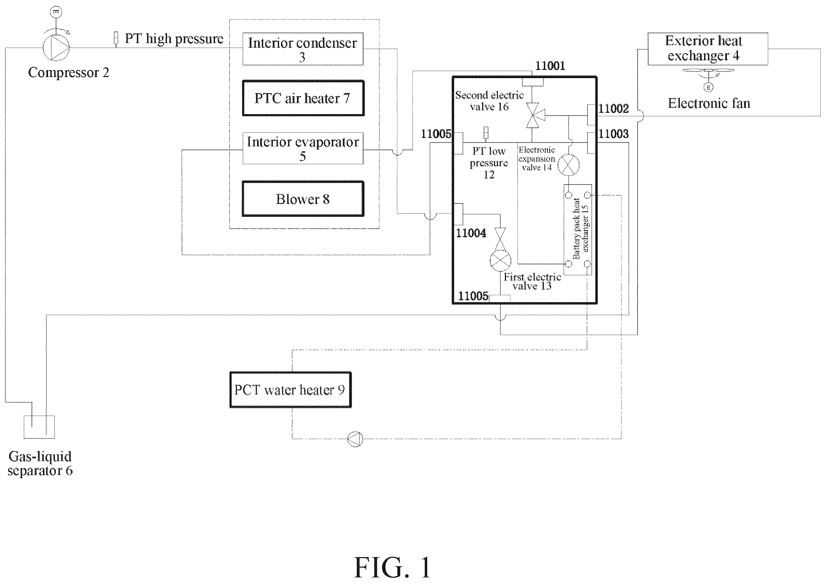

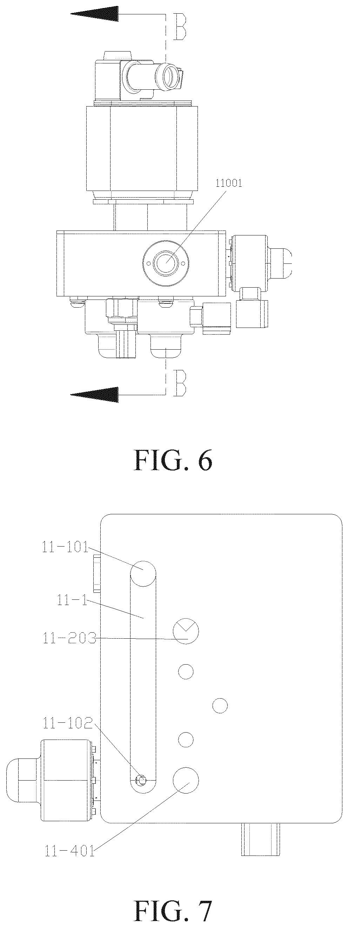

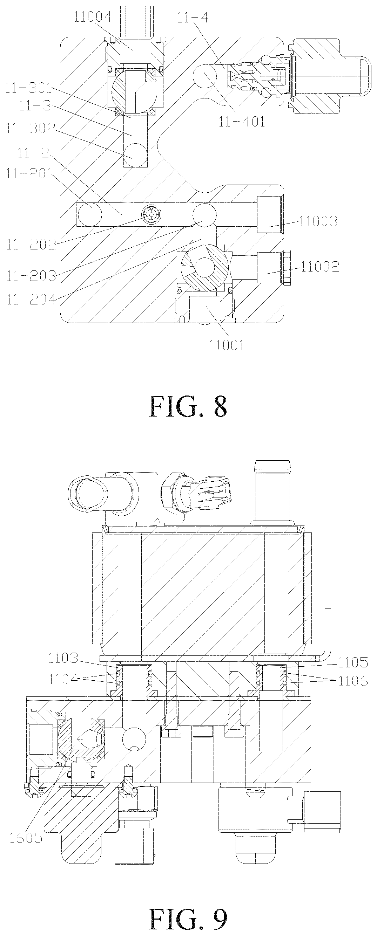

As shown in FIG. 1 to FIG. 9, the valve set integrated module provided by the present invention includes a body 11, a first electric valve 13, and a second electric valve 16. The body 11 is provided with multiple internal flow channels and multiple interfaces configured to communicate the internal flow channels with a heat exchange assembly of a thermal management system. In an illustrated implementation, the body 11 is configured to be a block shape to provide an internal flow channel therein. It should be noted that the present invention does not limit the configuration of the body 11, as long as providing the internal flow channel therein.

The first electric valve 13 and the second electric valve 16 are arranged on the body 11 and in communication with the internal flow channel. The first electric valve 13 and the second electric valve 16 are configured to be switchable between a blocked/unblocked position and a throttled position. It should be noted that the first electric valve 13 and the second electric valve 16 each refer to a valve body. The valve body may be switched between an unblocking/blocking function and a throttling-induced pressure reducing function as required, or it can be said that the valve body may be configured as a solenoid valve and an expansion valve.

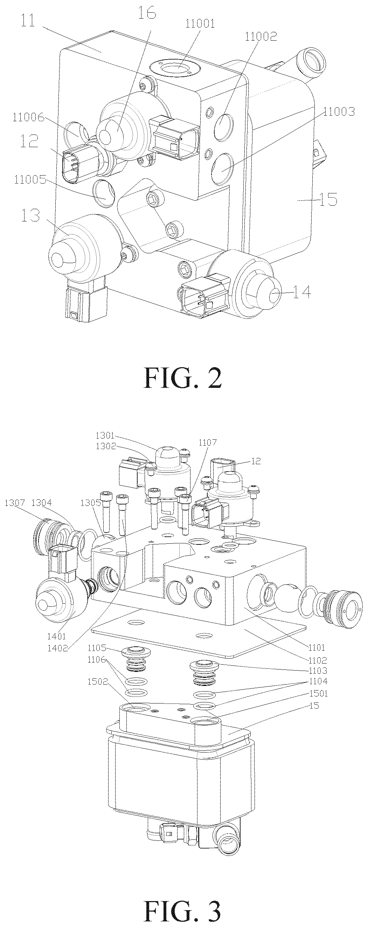

The first electric valve 13 and the second electric valve 16 may be any electric valve capable of switching between the unblocking/blocking function and the throttling-induced pressure reducing function. The first electric valve 13 is used as an example. As described in FIG. 3, the first electric valve 13 may include a spherical valve core 1305, an adjustment base 1307, and an execution motor 1301. The valve core 1305 is provided with a first channel and a second channel for communicating with each other and for communicating with the internal flow channel. The adjustment base 1307 is configured to hold the valve core 1305 in the body 11. For example, the adjusting base 1307 is provided with an external thread, and the body 11 is provided with an internal thread for mating with the external thread. The execution motor 1301 is configured to drive the valve core 1305 to rotate, and with the rotation of the valve core 1305, the first electric valve 13 can realize the switching between the unblocking/blocking function and the throttling-induced pressure reducing function. Further, annular sealing blocks 1304 are arranged on two ends of the first electric valve 13 in a mounting direction to define an interface. The execution motor 1301 is mounted to the body 11 through a screw 1301. The second electric valve 13 may have the same configuration as the first electric valve 16. Details are not described herein again.

In the present invention, a first end of the first electric valve 13 is in communication with an interior condenser outlet interface 11004. A second end of the first electric valve 13 is in communication with the exterior heat exchanger inlet interface 11005. A first end of the second electric valve 16 is in communication with an exterior heat exchanger outlet interface 11002. A second end of the second electric valve 16 is selectively communicated with an interior evaporator inlet interface 11001 or a gas-liquid separator inlet interface 11003. The communication herein can be either unblocking/blocking or throttling.

According to the above solution, that is, the present invention designs a valve set integrated module having multiple internal passages. The valve set integrated module can communicate the internal flow channel with the heat exchange assembly of the external thermal management system through different interfaces arranged on the body to form multiple different thermal management circuits, and the first electric valve and the second electric valve integrated on the module control the unblocking/blocking or the throttling of the thermal management circuits, to realize multiple preset thermal management modes. The valve set integrated module designed through the above technical solution can reduce the use of a valve control assembly and simplify connection of a pipeline of the thermal management system while realizing multiple thermal management modes, reduce weight of the vehicle, reduce a cost and a fuel consumption, and save space for arranging the vehicle.

Multiple manners may be used to design the internal flow channel. According to an implementation of the present invention, the internal flow channel includes an internal flow channel and an external flow channel. It should be noted that the internal and external of the flow channel are relative to the internal and external of the body 11. That is to say, both the internal flow channel and the external flow channel are arranged on the body 11, and do not refer to the connecting pipeline in the thermal management system. The body 11 includes a first portion 1101 and a second portion 1102. The first portion 1101 has a first connecting surface, and the second portion has a second connecting surface. The first connecting surface is hermetically connected with the second connecting surface. That is, the first connecting surface and the second connecting surface are configured to engage with each other. The internal flow channel is arranged inside the first portion 1102. At least one groove is arranged on the first connecting surface of the first portion 1101. The groove on the first connecting surface and the second connecting surface may jointly define the external flow channel.

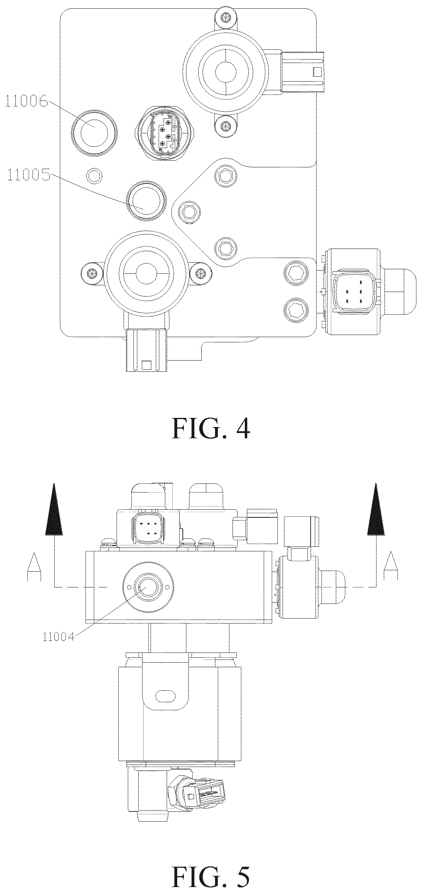

An implementation with three external flow channels and one internal flow channel is shown in FIG. 4 to FIG. 9. An inlet 11-101 of the second electric valve 16 communicates with an inlet 11-102 of the electronic expansion valve 14 to form a first external flow channel 11-1. An outlet 11-203 of the second electric valve 16, a battery pack heat exchanger outlet interface 1501, an interior evaporator outlet interface 11006, a PT sensor low-pressure interface 11-202, and a gas-liquid separator inlet interface 11002 are communicated to form a first internal flow channel 11-2. An outlet 11-301 of the first electric valve 13 and the inlet interface 11005 of the exterior heat exchanger are communicated to form a second internal flow channel 11-3. An outlet 11-401 of the second electronic expansion valve 14 and an inlet 1502 of the battery pack heat exchanger 15 are communicated to form a third internal flow channel 11-4. It should be understood that the above arrangement of the internal flow channel is an exemplary illustration, and any other feasible arrangement of the internal flow channel can also be applied to the present invention without interference, which is not limited herein. In addition, it should be noted out that when some implementations do not have corresponding heat exchange assemblies, for example, the battery pack heat exchanger 15 or the PT low pressure sensor 12, the corresponding internal flow channel may be omitted. Further, a cross section of the groove configured to form the external flow channel may be U-shaped, and an area of the sectional surface of the groove is greater than 10% of a valve port area of the first electric valve 13 and the second electric valve 16, so that the refrigerant can flow smoothly from valve ports of the first electric valve 13 and the second electric valve 16 into the external flow channel. In addition, the internal flow channel communicated between an interior evaporator outlet interface 11006 and the gas-liquid separator inlet interface 11003 may be constructed to be a linear flow channel, to reduce the flow resistance of the refrigerant. When the valve set integrated module is provided with a PT low pressure sensor 12, the PT low pressure sensor 12 may be arranged between the interior evaporator outlet interface 11006 and the gas-liquid separator inlet interface 11003. When the internal flow channel communicated between an interior evaporator outlet interface 11006 and the gas-liquid separator inlet interface 11003 may be constructed to be a linear flow channel, the measurement accuracy of the PT sensor 12 may also be improved.

According to an implementation of the present invention, as shown in FIG. 1 to FIG. 3, the valve set integrated module may further include a second electronic expansion valve 14 arranged on the body 11. A first end of the electronic expansion valve 14 is in communication with an exterior heat exchanger outlet interface 11002, and a second end of the electronic expansion valve 14 is in communication with a battery pack heat exchanger inlet interface arranged on the body 11. The electronic expansion valve 14 may include a plug-in portion 1401 for inserting into the body 11. The electronic expansion valve 14 and the body 11 are fixedly connected by a threaded pin 1402 through a trailing end of the body 11.

The valve set integrated module may further include a battery pack heat exchanger 15 arranged on the body 11. The battery pack heat exchanger 15 can be connected to the body 11 through a screw 1107. An inlet of the battery pack heat exchanger 15 is in communication with the battery pack heat exchanger inlet interface, and an outlet of the battery pack heat exchanger 15 is connected to a gas-liquid separator. In a manner for mounting the battery pack heat exchanger 15, connecting joints 1103 and 1105 configured to connect with the first end and the second end of the battery pack heat exchanger 15 and O-rings 1104 and 1106 configured to seal the first end and the second end of the battery pack heat exchanger 15 are respectively arranged on the body 11. The battery pack heat exchanger 15 is connected to the body 11 through a threaded fastener.

Through the above technical solution, the thermal management mode of battery pack cooling can be further realized. In addition, in the present invention, as shown in FIG. 2, the electronic expansion valve 14 and the exterior heat exchanger outlet interface 11002 are assembled on a same side of the body 11, so that the second electric valve 16 and the electronic expansion valve 14 share a same inlet 11002, and ensure that the flow channel connecting the inlet 11-102 of the electronic expansion valve 14 is short, does not form a turning angle, and achieves a low flow resistance design.

The thermal management modes that can be realized by the above technical solution are exemplarily described below in conjunction with FIG. 1 to FIG. 9.

### Air-conditioning refrigeration mode:

The compressor 2 discharges a high-temperature and high-pressure gaseous refrigerant and enters the interior condenser 3. After the refrigerant is exothermic and liquefied in the interior condenser 3, the refrigerant passes through the interior condenser outlet interface 11004 and enters the first electric valve 13. In this case, the first electric valve 13 is switched to a solenoid valve and is in an open state. The refrigerant flowing out of an outlet 11-301 of the first electric valve 13 enters an inlet 11-302 of the exterior heat exchanger through the second internal flow channel 11-3, that is, the inlet interface 11005 of the exterior heat exchanger, and enters through the connecting line into the exterior heat exchanger 4. The refrigerant flowing out of the exterior heat exchanger 4 passes through the exterior heat exchanger outlet interface 11002 and enters the second electric valve 16 through the connecting line. In this case, the second electric valve 16 is switched to an expansion valve for use, and the refrigerant flowing out of the second electric valve 16 after throttling-induced pressure reduction flows out of the valve set integrated module through the interior evaporator 11001, and enters the interior evaporator 5 through the connecting pipeline to absorb the ambient heat for evaporation. The cooled ambient temperature blows cold air into the crew compartment through the blower 8 to cool. The refrigerant flowing out of the interior evaporator 5 passes through the interior evaporator outlet interface 11006 and enters the valve set integrated module through the connecting pipeline. The refrigerant enters the gas-liquid separator 6 through the first internal flow channel 11-2 and then enters the gas-liquid separator inlet 11003, and finally returns to the compressor 2, thereby completing an air conditioning refrigeration mode cycle.

### Heat pump heating mode:

The compressor 2 discharges a high-temperature and high-pressure gaseous refrigerant, and enters the interior condenser 3 to release heat. The interior condenser 3 releases heat and combines with the PTC air heater 7, and then blows the hot air into the vehicle through the blower 8 to heat the vehicle. After the refrigerant is exothermic and liquefied in the interior condenser 3, the refrigerant passes through the interior condenser outlet interface 11004 and enters the first electric valve 13. In this case, the first electric valve 13 is switched to an expansion valve for use, and after throttling-induced pressure reduction, an outlet 11-301 flowing out of the first electric valve 13 enters an inlet 11-302 of the exterior heat exchanger, that is, an inlet interface 11005 of the exterior heat exchanger, and enters the exterior heat exchanger 4 through the connecting line. The refrigerant flowing out of the exterior heat exchanger 4 passes through the exterior heat exchanger outlet interface 11002 and enters the second electric valve 16 through the connecting line. In this case, the second electric valve is switched to a solenoid valve and is in an open state. The refrigerant flowing out of the second electric valve 16 enters the second internal flow channel 11-3 through the outlet 11-204 of the second electric valve 16, is connected to the gas-liquid separator 6 through the gas-liquid separator inlet 11003, and finally returns to the compressor 2, thereby completing a heat pump heating mode cycle.

### Dehumidification mode:

The compressor 2 discharges a high-temperature and high-pressure gaseous refrigerant and enters the interior condenser 3. After the refrigerant is exothermic and liquefied in the interior condenser 3, the refrigerant passes through the interior condenser outlet interface 11004 and enters the first electric valve 13. In this case, the first electric valve 13 is switched to a solenoid valve and is in an open state. The refrigerant flowing out of an outlet 11-301 of the first electric valve 13 enters an inlet 11-302 of the exterior heat exchanger through the second internal flow channel 11-3, that is, the inlet interface 11005 of the exterior heat exchanger, and enters through the connecting line into the exterior heat exchanger 4. The refrigerant flowing out of the exterior heat exchanger 4 passes through the exterior heat exchanger outlet interface 11002 and enters the second electric valve 16 through the connecting line. In this case, the second electric valve 16 is switched to an expansion valve for use, and the refrigerant flowing out of the second electric valve 16 after throttling-induced pressure reduction flows out of the valve set integrated module through the interior evaporator 11001, and enters the interior evaporator 5 through the connecting pipeline. The refrigerant absorbs heat in the interior evaporator 5 and then cools, circulates the indoor air with the interior evaporator 5 through the blower 8, and the indoor water vapor condenses when passing through the outside of the interior evaporator 5 to achieve the function of dehumidification.

### Battery cooling mode:

The compressor 2 discharges a high-temperature and high-pressure gaseous refrigerant and enters the interior condenser 3. After the refrigerant is exothermic and liquefied in the interior condenser 3, the refrigerant passes through the interior condenser outlet interface 11004 and enters the first electric valve 13. In this case, the first electric valve 13 is switched to a solenoid valve and is in an open state. The refrigerant flowing out of an outlet 11-301 of the first electric valve 13 enters an inlet 11-302 of the exterior heat exchanger through the second internal flow channel 11-3, that is, the inlet interface 11005 of the exterior heat exchanger, and enters through the connecting line into the exterior heat exchanger. The refrigerant flowing out of the exterior heat exchanger 4 passes through the exterior heat exchanger outlet interface 11002 and enters the valve set integrated module through the connecting line. In this case, the second electric valve 16 is closed, the refrigerant enters the battery pack heat exchanger 15 after being vaporized by the electronic expansion valve 14, and a low-temperature refrigerant exchanges heat with a water circuit to cool the battery pack.

### Air conditioning refrigeration and battery cooling dual-open mode:

The compressor 2 discharges a high-temperature and high-pressure gaseous refrigerant and enters the interior condenser 3. After the refrigerant is exothermic and liquefied in the interior condenser 3, the refrigerant passes through the interior condenser outlet interface 11004 and enters the first electric valve 13. In this case, the first electric valve 13 is switched to a solenoid valve and is in an open state. The refrigerant flowing out of an outlet 11-301 of the first electric valve 13 enters an inlet 11-302 of the exterior heat exchanger through the second internal flow channel 11-3, that is, the inlet interface 11005 of the exterior heat exchanger, and enters through the connecting line into the exterior heat exchanger 4. The refrigerant flowing out of the exterior heat exchanger 4 passes through the exterior heat exchanger outlet interface 11002 and enters the second electric valve 16 through the connecting line. In this case, the second electric valve 16 is switched to an expansion valve for use, and the refrigerant flowing out of the second electric valve 16 after throttling-induced pressure reduction flows out of the valve set integrated module through the interior evaporator 11001, and enters the interior evaporator 5 through the connecting pipeline to absorb the ambient heat for evaporation. The cooled ambient temperature blows cold air into the crew compartment through the blower 8 to cool. The electronic expansion valve 14 is opened, the vaporized refrigerant enters the battery pack heat exchanger 15 after being vaporized by the electronic expansion valve 14, and the low-temperature refrigerant exchanges heat with the water circuit to cool the battery pack.

A second object of the present invention is to provide a thermal management system. The system includes an exterior heat exchange assembly of the thermal management system and the valve set integrated module in any of the above implementations. The external heat exchange assembly includes multiple of a compressor 2, an interior condenser 3, an exterior heat exchanger 4, an interior evaporator 5, a gas-liquid separator 6, a PTC air heater 7, a blower 8, and a PTC water heater 9.

A third object of the present invention is to provide a vehicle, which includes the thermal management system, and can realize all preset thermal management modes of the thermal management system. Details are not described herein again.

The implementations of the present invention are described in detail above with reference to the accompanying drawings. However, the present invention is not limited to the specific details in the foregoing implementations, multiple simple variations may be made to the technical solution of the present invention within a range of the technical concept of the present invention, and these simple variations fall within the protection scope of the present invention.

Moreover, it should be noted that the specific technical features described in the foregoing specific implementations may be combined in any proper manner in a case without conflict. To avoid unnecessary repetition, various possible combination manners are not described in the present invention.

In addition, different implementations of the present disclosure may also be arbitrarily combined without departing from the idea of the present disclosure, and these combinations shall still be regarded as content disclosed in the present disclosure.

## Claims

1. A valve set integrated module, comprising:
a body (11), provided with a plurality of internal flow channels and a plurality of interfaces configured to communicate the internal flow channels with a heat exchange assembly of an external thermal management system;
a first electric valve (13) and a second electric valve (16), arranged on the body (11) and in communication with the internal flow channel, the first electric valve (13) and the second electric valve (16) both being configured to be switchable between a blocked/unblocked position and a throttled position;
a first end of the first electric valve (13) being in communication with an interior condenser outlet interface (11004); a second end of the first electric valve (13) being in communication with an exterior heat exchanger inlet interface (11005); a first end of the second electric valve (16) being in communication with an exterior heat exchanger outlet interface (11002); and a second end of the second electric valve (16) being selectively communicated with an interior evaporator inlet interface (11001) or a gas-liquid separator inlet interface (11003).

2. The valve set integrated module according to claim 1, wherein the internal flow channels comprise an internal flow channel and an external flow channel; the body (11) comprises a first portion (1101) and a second portion (1102); the first portion (1101) has a first connecting surface; the second portion (1102) has a second connecting surface; the first connecting surface is hermetically connected with the second connecting surface; a plurality of internal flow channels are arranged inside the first portion (1101); at least one groove is arranged on the first connecting surface of the first portion (1101); and the groove on the first connecting surface and the second connecting surface jointly define the external flow channel.

3. The valve set integrated module according to any of claims 1 and 2, wherein a sectional surface of the groove is U-shaped; and an area of the sectional surface of the groove is greater than 10% of a valve port area of the first electric valve (13) and the second electric valve (16).

4. The valve set integrated module according to any of claims 1 to 3, wherein the internal flow channel communicated between an interior evaporator outlet interface (11006) and the gas-liquid separator inlet interface (11003) is a linear flow channel.

5. The valve set integrated module according to any of claims 1 to 4, further comprising a PT low pressure sensor (12), wherein the PT low pressure sensor (12) is arranged between the interior evaporator outlet interface (11006) and the gas-liquid separator inlet interface (11003).

6. The valve set integrated module according to any of claims 1 to 5, further comprising an electronic expansion valve (14) arranged on the body (11), a first end of the electronic expansion valve (14) being in communication with the exterior heat exchanger outlet interface; and a second end of the electronic expansion valve (14) being in communication with a plate-type heat exchanger inlet interface arranged on the body (11).

7. The valve set integrated module according to any of claims 1 to 6, further comprising a battery pack heat exchanger (15) arranged on the body (11), an inlet of the battery pack heat exchanger (15) being in communication with a battery pack heat exchanger inlet interface (11021); and an outlet of the battery pack heat exchanger (15) being connected with a gas-liquid separator.

8. The valve set integrated module according to any of claims 1 to 7, wherein the electronic expansion valve (14) and the exterior heat exchanger outlet interface (11002) are assembled on a same side of the body (11).

9. A thermal management system, comprising an external heat exchange assembly of the thermal management system and the valve set integrated module according to any of claims 1 to 8, the external heat exchange assembly comprising multiple of a compressor (2), an interior condenser (3), an exterior heat exchanger (4), an interior evaporator (5), a gas-liquid separator (6), a PTC air heater (7), a blower (8), and a PTC water heater (9).

10. A vehicle, **characterized in that** it comprises the thermal management system according to claim 9.

## Patentansprüche

1. Integriertes Ventilsatzmodul, umfassend:
einen Körper (11), der mit einer Vielzahl von internen Strömungskanälen und einer Vielzahl von Schnittstellen versehen ist, die konfiguriert sind, um die internen Strömungskanäle mit einer Wärmetauschanordnung eines externen thermischen Verwaltungssystems zu kommunizieren;
ein erstes elektrisches Ventil (13) und ein zweites elektrisches Ventil (16), die auf dem Körper (11) eingerichtet sind und mit dem internen Strömungskanal in Kommunikation stehen, wobei das erste elektrische Ventil (13) und das zweite elektrische Ventil (16) beide konfiguriert sind, um zwischen einer gesperrten/entsperrten Position und einer gedrosselten Position umschaltbar zu sein;
ein erstes Ende des ersten elektrischen Ventils (13), das mit einer inneren Kondensatorauslassschnittstelle (11004) in Kommunikation steht; ein zweites Ende des ersten elektrischen Ventils (13), das mit einer äußeren Wärmetauschereinlassschnittstelle (11005) in Kommunikation steht; ein erstes Ende des zweiten elektrischen Ventils (16), das mit einer äußeren Wärmetauscherauslassschnittstelle (11002) in Kommunikation steht; und ein zweites Ende des zweiten elektrischen Ventils (16), das selektiv mit einer inneren Verdampfereinlassschnittstelle (11001) oder einer Gas-Flüssigkeits-Abscheidereinlassschnittstelle (11003) kommuniziert.

2. Integriertes Ventilsatzmodul nach Anspruch 1, wobei die internen Strömungskanäle einen internen Strömungskanal und einen externen Strömungskanal umfassen; der Körper (11) einen ersten Abschnitt (1101) und einen zweiten Abschnitt (1102) umfasst; der erste Abschnitt (1101) eine erste Verbindungsoberfläche aufweist; der zweite Abschnitt (1102) eine zweite Verbindungsoberfläche aufweist; die erste Verbindungsoberfläche mit der zweiten Verbindungsoberfläche hermetisch verbunden ist; eine Vielzahl von internen Strömungskanälen innerhalb des ersten Abschnitts (1101) eingerichtet sind; mindestens eine Nut auf der ersten Verbindungsoberfläche des ersten Abschnitts (1101) eingerichtet ist; und die Nut auf der ersten Verbindungsoberfläche und der zweiten Verbindungsoberfläche gemeinsam den externen Strömungskanal definieren.

3. Integriertes Ventilsatzmodul nach einem der Ansprüche 1 und 2, wobei eine Querschnittsoberfläche der Nut U-förmig ist; und eine Fläche der Querschnittsoberfläche der Nut größer als 10 % einer Ventilanschlussfläche des ersten elektrischen Ventils (13) und des zweiten elektrischen Ventils (16) ist.

4. Integriertes Ventilsatzmodul nach einem der Ansprüche 1 bis 3, wobei der interne Strömungskanal, der zwischen einer inneren Verdampferauslassschnittstelle (11006) und der Gas-Flüssigkeits-Abscheidereinlassschnittstelle (11003) kommuniziert ist, ein linearer Strömungskanal ist.

5. Integriertes Ventilsatzmodul nach einem der Ansprüche 1 bis 4, ferner umfassend einen PT-Niederdrucksensor (12), wobei der PT-Niederdrucksensor (12) zwischen der inneren Verdampferauslassschnittstelle (11006) und der Gas-Flüssigkeits-Abscheidereinlassschnittstelle (11003) eingerichtet ist.

6. Integriertes Ventilsatzmodul nach einem der Ansprüche 1 bis 5, ferner umfassend ein elektronisches Expansionsventil (14), das auf dem Körper (11) eingerichtet ist, wobei ein erstes Ende des elektronischen Expansionsventils (14) mit der äußeren Wärmetauscherauslassschnittstelle in Kommunikation steht; und ein zweites Ende des elektronischen Expansionsventils (14) mit einer plattenartigen Wärmetauschereinlassschnittstelle, die auf dem Körper (11) eingerichtet ist, in Kommunikation steht.

7. Integriertes Ventilsatzmodul nach einem der Ansprüche 1 bis 6, ferner umfassend einen Batteriesatzwärmetauscher (15), der auf dem Körper (11) eingerichtet ist, wobei ein Einlass des Batteriesatzwärmetauschers (15) mit einer Batteriesatzwärmetauschereinlassschnittstelle (11021) in Kommunikation steht; und ein Auslass des Batteriesatzwärmetauschers (15) mit einem Gas-Flüssigkeits-Abscheider verbunden ist.

8. Integriertes Ventilsatzmodul nach einem der Ansprüche 1 bis 7, wobei das elektronische Expansionsventil (14) und die äußere Wärmetauscherauslassschnittstelle (11002) auf einer gleichen Seite des Körpers (11) angeordnet sind.

9. Thermisches Verwaltungssystem, umfassend eine externe Wärmeaustauschanordnung des thermischen Verwaltungssystems und das integrierte Ventilsatzmodul nach einem der Ansprüche 1 bis 8, die externe Wärmeaustauschanordnung umfassend mehrere von einem Kompressor (2), einem inneren Kondensator (3), einem äußeren Wärmetauscher (4), einem inneren Verdampfer (5), einem Gas-Flüssigkeits-Abscheider (6), einem PTC-Lufterhitzer (7), einem Gebläse (8) und einem PTC-Wassererhitzer (9).

10. Fahrzeug, **dadurch gekennzeichnet, dass** es das thermische Verwaltungssystem nach Anspruch 9 umfasst.

## Revendications

1. Module d'intégration d'un ensemble de vannes, comprenant :
un corps (11), pourvu d'une pluralité de canaux d'écoulement internes et d'une pluralité d'interfaces conçues pour faire communiquer les canaux d'écoulement internes avec un ensemble d'échange de chaleur d'un système de gestion thermique externe ;
une première vanne électrique (13) et une seconde vanne électrique (16), agencées sur le corps (11) et en communication avec le canal d'écoulement interne, la première vanne électrique (13) et la seconde vanne électrique (16) étant toutes deux conçues pour pouvoir être commutées entre une position bloquée/débloquée et une position d'étranglement ;
une première extrémité de la première vanne électrique (13) est en communication avec une interface de sortie du condenseur intérieur (11004) ; une seconde extrémité de la première vanne électrique (13) étant en communication avec une interface d'entrée de l'échangeur de chaleur extérieur (11005) ; une première extrémité de la seconde vanne électrique (16) étant en communication avec une interface de sortie de l'échangeur de chaleur extérieur (11002) ; et une seconde extrémité de la seconde vanne électrique (16) communiquant sélectivement avec une interface d'entrée de l'évaporateur intérieur (11001) ou une interface d'entrée du séparateur gaz-liquide (11003).

2. Module d'intégration d'un ensemble de vannes selon la revendication 1, dans lequel les canaux d'écoulement internes comprennent un canal d'écoulement interne et un canal d'écoulement externe ; le corps (11) comprend une première partie (1101) et une seconde partie (1102) ; la première partie (1101) présente une première surface de raccordement ; la seconde partie (1102) présente une seconde surface de raccordement ; la première surface de raccordement est hermétiquement raccordée à la seconde surface de raccordement ; une pluralité de canaux d'écoulement internes sont agencés à l'intérieur de la première partie (1101) ; au moins une rainure est agencée sur la première surface de raccordement de la première partie (1101) ; et la rainure sur la première surface de raccordement et la seconde surface de raccordement définissent conjointement le canal d'écoulement externe.

3. Module d'intégration d'un ensemble de vannes selon l'une quelconque des revendications 1 et 2, dans lequel une surface sectionnelle de la rainure est en forme de U ; et une région de la surface sectionnelle de la rainure est supérieure à 10 % de la région de l'orifice de la vanne de la première vanne électrique (13) et de la seconde vanne électrique (16).

4. Module d'intégration d'un ensemble de vannes selon l'une quelconque des revendications 1 à 3, dans lequel le canal d'écoulement interne communiqué entre une interface de sortie de l'évaporateur intérieur (11006) et l'interface d'entrée du séparateur gaz-liquide (11003) est un canal d'écoulement linéaire.

5. Module d'intégration d'un ensemble de vannes selon l'une quelconque des revendications 1 à 4, comprenant en outre un capteur de basse pression PT (12), dans lequel le capteur de basse pression PT (12) est agencé entre l'interface de sortie de l'évaporateur intérieur (11006) et l'interface d'entrée du séparateur gaz-liquide (11003).

6. Module d'intégration d'un ensemble de vannes selon l'une quelconque des revendications 1 à 5, comprenant en outre une vanne d'expansion électronique (14) agencée sur le corps (11), une première extrémité de la vanne d'expansion électronique (14) étant en communication avec l'interface de sortie de l'échangeur de chaleur extérieur ; et une seconde extrémité de la vanne d'expansion électronique (14) étant en communication avec une interface d'entrée de l'échangeur de chaleur à plaques agencée sur le corps (11).

7. Module d'intégration d'un ensemble de vannes selon l'une quelconque des revendications 1 à 6, comprenant en outre un échangeur de chaleur du bloc-batterie (15) agencé sur le corps (11), une entrée de l'échangeur de chaleur du bloc-batterie (15) étant en communication avec une interface d'entrée de l'échangeur de chaleur du bloc-batterie (11021) ; et une sortie de l'échangeur de chaleur du bloc-batterie (15) étant raccordée à un séparateur gaz-liquide.

8. Module d'intégration d'un ensemble de vannes selon l'une quelconque des revendications 1 à 7, dans lequel la vanne d'expansion électronique (14) et l'interface de sortie de l'échangeur de chaleur extérieur (11002) sont assemblés sur un même côté du corps (11).

9. Système de gestion thermique, comprenant un ensemble d'échange de chaleur externe du système de gestion thermique et le module d'intégration de l'ensemble de vannes selon l'une quelconque des revendications 1 à 8, l'ensemble d'échange de chaleur externe comprenant un multiple d'un compresseur (2), un condenseur intérieur (3), un échangeur de chaleur extérieur (4), un évaporateur intérieur (5), un séparateur gaz-liquide (6), un réchauffeur d'air PTC (7), une soufflerie (8) et un chauffe-eau PTC (9).

10. Véhicule, **caractérisé en ce qu'**il comprend le système de gestion thermique selon la revendication 9.
